# EUROPÄISCHE PATENTANMELDUNG

(11) **EP 1 298 838 A1**
(43) Veröffentlichungstag der Anmeldung: **02.04.2003**
(21) Anmeldenummer: 01123447.3
(22) Anmeldetag: 28.09.2001
(51) Int. Cl.: H04L 12/24, H04L 12/26

(54) **Netzwerk-Performance-Management**

(71) Anmelder: SIEMENS AKTIENGESELLSCHAFT, 80333 München (DE)
(72) Erfinder: Schwagmann, Josef, 85221 Dachau (DE)

(57) **Zusammenfassung**

Bei einem Verfahren zur Bestimmung der Performance eines Netzwerkes mit fest zugeordneten Pfaden (dedicated routes), bestehend aus einer Vielzahl von Netzelementen und Verbindungen zwischen den Netzelementen, wobei in den Netzelementen Performancemessungen von Performanceindikatoren durchgeführt und die Daten der Performancemessungen an ein Performance-Management übertragen werden, wird die Topologie des Netzwerkes in einer Topologie-Datenbank abgelegt, die die Netzelemente des Netzwerks, deren Verbindungen und Eigenschaften enthält, wobei anhand der Topologie-Datenbank die Performance vorbestimmter End-to-End-Verbindungen ermittelt wird.

## Beschreibung

Die Erfindung betrifft ein Verfahren zum Performance-Management von Kommunikationsnetzwerken, insbesondere Telekommunikationsnetzwerken, die eine große Anzahl von Netzwerkelementen enthalten, gemäß dem Oberbegriff des Patentanspruchs 1.

Das Management von Telekommunikationsnetzwerken beinhaltet einer großen Anzahl von Netzwerksbetriebsprozeßen, die sich grob in drei Klassen unterteilt lassen, nämlich Aufbau des Netzwerkes, Betrieb des Netzwerkes und Erweiterung des Netzwerkes. Ein Beispiel eines Netzwerk-Managements ist in WO99/20034 beschrieben.

Der Bereich des Betriebs und Unterhalt des Netzwerks betrifft die täglichen Arbeitsroutinen zum Betreiben und Unterhalten des Netzwerkes. Darunter fallen die Fehlerbehandlung innerhalb des Netzwerkes in Echtzeit, das Abarbeiten von Alarmmeldungen, Lokalisieren und Analysieren der Fehler und das Durchführen von Reparaturen.

Ein typisches Telekommunikationsnetzwerk besteht aus einer großen Anzahl von Netzwerkelementen NE, einschließlich Schaltknoten, Basisstationen, Übertragungsknoten, etc.. Beispielsweise besteht ein großes Netzwerk aus zehntausenden Netzwerkelementen, wobei jedes Netzwerkelement aus einer Vielzahl von Einheiten bestehen kann. Aufgrund dieser komplexen Natur eines derartigen Netzwerks kommt es täglich zu einer großen Anzahl von Fehlermeldungen, wobei jeder Fehler sich in einem oder mehreren Alarmmeldungen manifestieren kann. Es ist jedoch auch möglich, daß ein Fehler sich überhaupt nicht in einem Alarm äußert.

Um das Netzwerk zu Betreiben und zu Beobachten, ist mindestens ein Netzwerk-Management bzw. Netzwerk-Managementsystem im Netzwerk angeordnet in das Alarmmeldungen und andere Netzwerkinformationen gesammelt und ausgewertet werden, um das Netzwerk zu steuern und Wartungen durchzuführen.

Ferner weist das Netzwerk-Managementsystem üblicherweise ein Performance-Management auf, in dem Performance-Messungen zusammengeführt werden, anhand derer die Leistungsfähigkeit oder Performance des Netzwerkes und seiner Abschnitte ermittelt werden, um den Betrieb des Netzwerks zu optimieren, die Servicequalität zu verbessern und das Netzwerk so auszulasten, daß die Kosten minimiert werden. Diese Performance-Messungen werden in vorbestimmten Netzwerkelementen oder Netzwerkknoten vorgenommen und umfassen beispielsweise Anrufversuche, blockierte oder abgebrochene Anrufe, fehlgeschlagene Handover-Prozesse, Zellenverluste bei ATM-Netzen (ATM: Asynchronous Transmission Mode), Bit-Fehlerraten, und Packetverluste bei IP-Netzen. Die in den Netzwerkelementen erzeugten Performance-Daten werden in den Netzwerkelementen üblicherweise zwischengespeichert und in vorbestimmten Intervallen von dem Performance-Management abgerufen. Dort werden diese Daten beispielsweise in eine Performance-Datenbank abgelegt und ausgewertet. Diese Zeitintervalle, in denen die Daten abgerufen und übertragen werden, betragen üblicherweise 5 bis 15 Minuten.

Typischerweise werden bei einer offline Auswertung die Daten für eine vorgegebene Zeit, beispielsweise 24 h, gesammelt und ausgewertet. Damit können zwar Trends und Probleme in einem Kommunikationsnetzwerk erkannt werden, allerdings ist eine aktuelle Beurteilung der Performance des Netzwerks nicht möglich.

Insbesondere werden bisher im Rahmen des Performance-Management die oben genannten Performance-Messungen aus Sicht des einzelnen Netzwerkelements vorgenommen. Eine Möglichkeit, eine direkte End-to-End-Betrachtung durchzuführen, um die Qualität des Services herauszufinden, gibt es nicht, da nicht bekannt ist, welche Teile bzw. Abschnitte des Netzwerks zu einer betrachteten End-to-End-Verbindung gehören, d.h. über welche Teile des Netzwerks die Verbindung zustande gekommen war.

Eine Evaluierung der Netzwerk-Performance unter Berücksichtigung der End-to-End-Verbindungen wird daher im nachhinein manuell aus den dann vorliegenden einzelnen Meßwerten der Netzelemente erzeugt, indem man die Topologie des Netzwerkes zugrundelegt. Allerdings kann es dann bei einer derartigen nachträglichen Betrachtung häufig vorkommen, daß entscheidende Meßwerte einzelner Netzelemente, über die die Verbindung zustande gekommen war, fehlen, da das entsprechende Netzelement im betrachteten Zeitintervall aus irgendwelchen Gründen keine Meßwerte zur Verfügung gestellt hat. Ist dies der Fall, so werden auch die Meßwerte der restlichen Netzelemente in ihrer Bedeutung unwichtiger und man kann einem gegebenenfalls vorhandenen Problem nicht auf die Spur kommen. Es muß daher dann sichergestellt werden, daß in einem nächsten Meßintervall eine komplette Meßreihe erstellt wird, d.h. sämtliche Meßwerte einschließlich der fehlenden Meßwerte bereitgestellt werden. Zwischen diesen Meßreihen können allerdings Tage liegen, so daß eine Betrachtung der Performance von End-to-End-Verbindungen erst zu einem späteren Zeitpunkt überhaupt möglich ist und Netzwerkprobleme so erst spät erkannt werden können. Ferner muß die Messung der Performance-Daten in den einzelnen Netzelementen von dessen Managementsystem eingeschaltet werden.

Der Erfindung liegt daher die Aufgabe zugrunde, ein Verfahren zur Ermittlung der Performance von End-to-End-Verbindungen zu schaffen, die zeitlich näher an dem aktuellen Verhalten des Netzwerks liegt.

Diese Aufgabe wird durch ein Verfahren nach Anspruch 1 gelöst. Bevorzugte Ausführungsformen der Erfindung sind Gegenstand der Unteransprüche.

In dem erfindungsgemäßen Verfahren zur Bestimmung der Performance eines Kommunikationsnetzwerkes mit fest zugeordneten Pfaden (dedicated routes), das aus einer Vielzahl von Netzelementen und Verbindungen zwischen den Netzelementen besteht, wobei in vorbestimmten Netzelementen Performancemessungen von Performanceindikatoren durchgeführt werden und an das Performance-Management übermittelt werden, wird die Topologie des Netzwerkes in einer Topologie-Datenbank abgelegt, die die Netzelemente, deren Verbindungen und deren Eigenschaften enthält, und es werden die Netzelemente, deren Performance zu bestimmen ist, anhand der Topologie-Datenbank bestimmt.

Vorzugsweise wird überprüft, ob ein ausgewähltes Netzelement einer zu analysierenden End-to-End-Verbindung Performance-Daten geliefert hat. Ist dies nicht der Fall, so wird die notwendige Messung in dem betreffenden Netzelement initiiert.

Durch das Bereitstellen einer Topologie-Datenbank, die das aktuelle Netz wiederspiegelt, ist es möglich direkt auf Netzveränderungen durch eine entsprechende Änderung der Topologie-Datenbank zu reagieren und diese Änderungen in die End-to-End-Betrachtung unmittelbar aufzunehmen. Ferner ergibt sich die Ermittlung der Performance einer End-to-End-Verbindungen in unmittelbarer zeitlicher Nähe zum aktuellen Zustand des Netzes.

Meßwerte derjenigen Netzelemente, die in dem auszuwertenden Zeitraster keine Meßwerte geliefert hatten, können daher nachgefordert werden oder es wird in dem entsprechenden Netzelement eine Messung initiiert, beispielsweise indem das Netzwerk-Performance-Management gezielt über eine Netzwerk-Ticket oder Workorder die entsprechende Messung einschaltet oder auf eine andere geeignete Art bewirkt. Durch diese proaktive Überwachung der Meßwerterfassung werden Lücken in der Erfassung der Meßwerte vermieden bzw. die Zeiträume der möglichen Meßlücken minimiert und es wird daher die Grundlage für eine möglichst zeitnahe am Istzustand des Netzwerk angesiedelte Analyse der Netzwerk-Performance gelegt.

Insgesamt wird durch die Einführung der Netzwerk-Topologie-Datenbank, die die Betrachtung der End-to-End- Verbindungen bereits bei der Einrichtung einer End-to-End-Verbindung bereitstellt, eine Überwachung der Performance von End-to-End-Verbindungen in einem wirtschaftlichen Rahmen in unmittelbarer zeitlicher Nähe zu dem Istzustand des Netzwerks möglich. Mögliche Lücken in der Meßwerterfassung können in der Gesamtbetrachtung sofort erkannt und geeignete Gegenmaßnahmen getroffen werden

Eine bevorzugte Ausführungsform der Erfindung wird nachfolgend anhand einer Zeichnung erläutert, die in schematischer Darstellung mögliche Verbindungen zwischen zwei Endpunkten in einem Kommunikationsnetz anhand möglicher Routen oder End-to-End-Verbindungen in einem einfachen Beispiel erläutert.

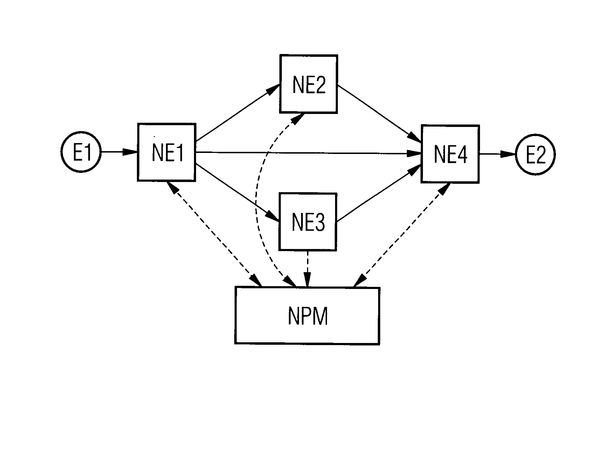

Die Figur zeigt anhand eines einfachen Beispiels in schematischer Darstellung die möglichen End-to-End-Verbindungen zwischen zwei Endgeräten E1 und E2 über hier beispielhaft dargestellte vier Netzelemente NE1, NE2, NE3 und NE4. Es sind in der Darstellung die Routen E1-NE1-NE4-E2, E1-NE1-NE2-NE4-E2 und E1-NE1-NE3-NE4-E2 möglich. Diese Netzelemente sowie die End-to-End-Verbindungen und deren Eigenschaften sind in der Topologie-Datenbank enthalten. Soll nun die Performance der End-to-End-Verbindung E1-NE1-NE2-NE4-E2 ermittelt werden, so wird unter Zuhilfenahme der Topologie-Datenbank Messungen in den Netzelementen NE1, NE2 und Ne4 initiert, während eine Messung in NE3 bei dieser Fragestellung nicht notwendig ist.

## Patentansprüche

1. Verfahren zur Bestimmung der Performance eines Netzwerkes mit fest zugeordneten Pfaden (dedicated routes), bestehend aus einer Vielzahl von Netzelementen und Verbindungen zwischen den Netzelementen, wobei in den Netzelementen Performancemessungen von Performanceindikatoren durchgeführt und die Daten der Performancemessungen an ein Performance-Management übertragen werden, **dadurch gekennzeichnet, daß** die Topologie des Netzwerkes in einer Topologie-Datenbank abgelegt ist, die die Netzelemente des Netzwerks, deren Verbindungen und Eigenschaften enthält, wobei anhand der Topologie-Datenbank die Performance vorbestimmter End-to-End-Verbindungen ermittelt wird.

2. Verfahren nach Anspruch 1, **dadurch gekennzeichnet, daß** die Performance der vorbestimmten End-to-End-Verbindung aus den Performance-Daten der die End-to-End-Verbindung bildenden Netzelemente bestimmt wird.

3. Verfahren nach Anspruch 2, **dadurch gekennzeichnet, daß** Performance-Messungen in den Netzelementen der betrachteten End-to-End-Verbindung initiiert werden, falls keine Meßwerte im Performance-Management vorliegen.

4. Verfahren nach Anspruch 3, **dadurch gekennzeichnet, daß** die Anforderung der Meßwerte von dem Netzelement durch eine Workorder des Performance-Managements bewirkt wird.

5. Verfahren nach einem der vorangegangenen Ansprüche, **dadurch gekennzeichnet, daß** die Meßwerte-Erfassung in einem vorgegebenen Zeitraster erfolgt.

6. Verfahren nach einem der vorangegangenen Ansprüche, **dadurch gekennzeichnet, daß** die Topologie-Datenbank Bestandteil eines Performance-Managements ist.
